# EUROPÄISCHE PATENTSCHRIFT

(11) **EP 0 556 557 B1**
(45) Veröffentlichungstag und Bekanntmachung des Hinweises auf die Patenterteilung: **11.09.1996**
(21) Anmeldenummer: 93100452.7
(22) Anmeldetag: 14.01.1993
(51) Int. Cl.: G01N 29/24, G01N 27/90

(54) **Verfahren zur Herstellung einer Aufnahme zum Verschleissschutz von Ultraschallwandlern**
Method and manufacture of a protection against wear of ultrasonic transducers
Procédé et mise en fabrication d'une protection contre l'usure de sondes ultrasonores

(30) Priorität: 15.02.1992 DE 4204643
(43) Veröffentlichungstag der Anmeldung: 25.08.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hübschen, Gerhard, Dr., W-6630 Saarlouis 2 (DE); Hickethier, Manfred, W-6610 Lebach (DE)

(56) Entgegenhaltungen:
- FR-A- 2 637 441
- GB-A- 2 189 602
- PATENT ABSTRACTS OF JAPAN vol. 14, no. 566 (C-0789) ; & JP-A-02 246 959 ( FUJI ELECTRONIC CO ) 2 Oktober 1990

## Beschreibung

Die Erfindung betrifft ein Verfahren zur Herstellung einer Aufnahme aus biegsamen Material zum Verschleißschutz von Ultraschallwandlern mit einem mit Ausnehmungen zur Aufnahme der Ultraschallwandler versehenen flexiblen Schutzkörper.

Eine solches Verfahren ist aus den Patent Abstracts of Japan, Vol. 13, No. 482, 02.11.1989, bekannt, mit welchem ein Ultraschallwandler mit piezoelektrischen Wandlerelementen hergestellt wird. Die Wandlerelemente werden in ein biegsames Material eingesetzt, welches dann auf ein Backing-Material der entsprechend dem zu prüfenden Körper komplementären Krümmung aufgeklebt wird. Dabei sind die Öffnungen im biegsamen Material durchgängig, so daß beim Einsatz entsprechend der Lehre dieser Schrift die Wandlerelemente auf dem zu prüfenden Werkstück aufsitzen. Dieses Verfahren ist daher zur Herstellung von Aufnahmen für elektromagnetische Ultraschall-Wandlerelemente nicht einsetzbar.

Bei elektromagnetischen Ultraschallwandlern und Wirbelstromsonden ist es notwendig, die sie aufbauenden empfindlichen Spulen, die nur eine Drahtstarke von 30 bis 80 Mikrometer aufweisen, mit einem Verschleißschutz zu versehen. Diese Sonden werden beim Betrieb in möglichst großer Nähe zu den Werkstoffoberflächen angeordnet, damit man z.B. bei den elektromagnetischen Ultraschallprüfköpfen eine hohe Anregungseffektivität erreichen kann. Daher muß die Schutzschicht des Verschleißschutzes sehr dünn und trotzdem verschleißfest sein. Gleichzeitig muß das Material elektrisch nicht leitend und nicht magnetisch sein.

Aus der EP 01 71 118 A1 ist eine Aufnahme für elektromagnetische Ultraschall-Wandlerelemente bekannt, die zur Untersuchung von röhrenförmigen, also gekrümmten Oberflächen einsetzbar ist. Diese Vorrichtung verfügt über eine Schutzschicht für die Ultraschall-Wandlerelemente in Gestalt von Kufen in die die Magnetpole sowie Spulenelemente hineinragen. Diese Aufnahme wird durch eine Montage der verschiedenen Elemente, Magnet, Spulen und Kufen in einem Gehäuse hergestellt. Beim Einsatz werden die besagten Kufen durch seitliche Führungsräder über die Oberfläche des zu prüfenden Gegenstandes geführt Das Verfahren zur Herstellung dieser Aufnahme weist mehrere Nachteile auf. Zum einen gestattet es nicht die Ausbildung einer dünnen Schutzschicht. Die Kufen verringern in erheblichem Maße die Empfindlichkeit des in die Aufnahme eingesetzten Sensors. Zum anderen ist die Genauigkeit der Anpassung an das durchzumessende Rohr immer nur so gut, wie es die mechanische Bearbeitung der Kufen und der sonstigen Abstandselemente gestattet.

Aus der DE 34 01 072 A1 ist ein elektrodynamischer Wandlerkopf bekannt, bei dessen Herstellung die Spulenelemente mit einer ebenen Schutzkappe versehen sind, die selber wiederum durch einen ebenen Schutzring beim Aufsetzen des Wandlers geschützt wird. Es besteht keinerlei Anpassung der Aufnahme an die Form des zu prüfenden Werkstückes, so daß die Empfindlichkeit des Wandlers bei dr Prüfung gekrümmter Flächen eher gering ist.

Die FR 2 406 824 zeigt einen zu der DE 34 01 072 A1 vergleichbaren Wandler, dessen Aufnahme durch mechanische Bearbeitung über in ihrer Oberfläche gekrümmte Stützelemente verfügt, die im Zusammenspiel mit einer gekrümmten keramischen Abdeckschicht eine bessere Anpassung an das zu prüfende Werkstück gestattet. Doch auch hier ist die Genauigkeit der Anordnung von der Exaktheit der mechanischen Bearbeitung abhängig.

Die Patent Abstracts of Japan, Vol. 10, No. 288, 30.09.1986 lehren die Unterteilung eines einstückigen Transducers in mehrere kleine Transducer, die gelenkig miteinander verbunden sind.

Bei allen bekannten elektromagnetischen Ultraschallwandlern werden die Wandlerelemente mit der Rückseite in einem festen Rahmen angeordnet, und auf der Vorderseite mit Keramiksubstraten, glasfaserverstärkten Kunststoffen oder Polyimid-Folien versehen. Diese Materialien zeigen große Nachteile. Die verwendeten Keramiksubstrate sind sehr brüchig und als ein Verschleißschutz für gekrümmte Oberflächen angepaßte Ultraschallwandler und Sonden nicht anwendbar. Die genannten Kunststoffmaterialien besitzen eine sehr geringe Abriebfestigkeit Außerdem ist der Aufwand bei der Fertigung solcher elektromagnetischer Wandler hoch.

Ausgehend von diesem Stand der Technik liegt der Erfindung die Aufgabe zugrunde, ein Verfahren zur Herstellung einer Aufnahme aus biegsamen Material zum Verschleißschutz von Ultraschallwandlern der eingangs genannten Art zu schaffen, mit dem elektromagnetische Ultraschallwandler zur Prüfung von insbesondere gekrümmten Oberflächen herstellbar sind, die bei der Prüfung dieser Oberflächen eine höhere Empfindlichkeit aufweisen und gleichzeitig sicher vor Verschleiß geschützt sind.

Diese Aufgabe wird erfindungsgemäß dadurch gelöst, daß eine Vielzahl von magnetischen Sondenelementen in die sich in ihrer Tiefe jeweils bis in unmittelbare Nähe zu der Unterseite des flexiblen Schutzkörpers erstrekkenden Ausnehmungen auf eine zuvor aufgebrachte Vergußunterschicht eingesetzt werden, daß der flexible Schutzkörper mit seiner Unterseite auf einen ferritischen Körper mit einer der Oberfläche des späteren Meßobjektes entsprechenden Oberfläche aufgesetzt wird, so daß die Unterseite des flexiblen Schutzkörpers an die Oberfläche des späteren Meßobjektes angepaßt wird, und daß nach einer Anordnungszeit die magnetischen Sondenelemente in den Ausnehmungen mit einem Kleber vergossen werden.

Dadurch, daß ein das Spezialpolyurethan verwendet wird, welches eine 15 bis 20 mal höhere Verschleißfestigkeit als Stahl aufweist, kann die Standzeit eines derart hergestellten Ultraschallwandlers stark erhöht werden. Gleichzeitig ist diese Aufnahme sehr elastisch.

Bei Dauerversuchen mit Ultraschallwandlern, die in einer solchen Aufnahme angeordnet sind und die mittels eines Manipulators an Stahltestkörpern bewegt worden sind, ergab sich bei einer Versuchsdauer von 24 Stunden keinerlei meßbarer Abrieb, wobei die Anpresskraft an die Werkstoffoberfläche ungefähr 50 Newton betrug.

Im folgenden werden Ausführungsbeispiele der Erfindung anhand der beigefügten Zeichnungen beispielhaft erläutert Es zeigen:
- Fig. 1: eine Aufnahme für einen Ultraschallwandler,
- Fig. 2: eine Querschnittsansicht entlang der Linie II-II in Fig. 1,
- Fig. 3: einen Herstellungsschritt des Verfahrens zur Herstellung eines Ultraschallwandlers für eine gekrümmte Oberfläche bei vorgesehener axialer Schalleinstrahlung,
- Fig. 4: die prinzipielle Anordnung der Permanentmagnete für einen Wandler nach Fig. 3,
- Fig. 5: die Endlage einer Permanentmagnetanordnung nach Fig. 4 nach dem Verguß in einer Aufnahme nach Fig. 3, und
- Fig. 6: eine perspektivische Explosionsansicht mehrerer Permanentmagnetanordnungen gemäß Fig. 3 mit ebenfalls dargestellten Hochfrequenzspulen.

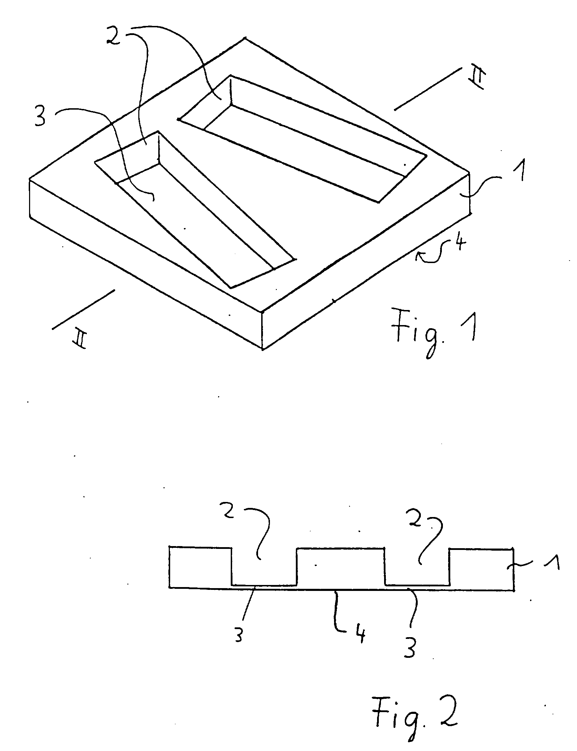

Die Fig. 1 zeigt eine Aufnahme mit ihrem Schutzkörper 1 gemäß einem ersten Ausführungsbeispiel der Erfindung.

Der Schutzkörper 1 bildet beispielsweise einen massiven Quader. Dieser besteht aus einem unter dem Warenzeichen Rhino-Hyde vertriebenen Spezialpolyurethan. Die Länge und Breite des Schutzkörpers 1 sind so gewählt, daß die über die in ihn einzusetzenden Ultraschallwandler oder Wirbelstromsonden hinausstehenden Ränder eine genügende Steifigkeit aufweisen. Die in der Fig. 1 nicht dargestellten Ultraschallwandler oder Wirbelstromsonden werden in die in dem Schutzkörper 1 vorgesehenen Ausnehmungen 2 eingesetzt. Die Ausnehmungen 2 weisen beispielsweise bei den hier einzusetzenden Wandlern eine in der Ansicht der Fig. 1 dargestellte rechteckige Form auf. Diese kann je nach den Außenmaßen der Wandler angepaßt werden. Die Hauptachse der Ausnehmungen 2 können in der Draufsicht auf die Ebene der Unterseite 4 des Schutzkörpers 1 aufeinanderzulaufen. Der Schutzkörper 1 verfügt über an ihm angebrachte Ansätze zum Befestigen der gesamten Aufnahme an einem Meßkopfhalter. Der Schutzkörper 1 weist zum Beispiel eine Dicke von 8 Millimetern auf, wobei die Tiefe der Ausnehmungen 2 7,8 Millimeter beträgt. Somit verbleiben am Boden der Ausnehmungen 2 die in der Fig. 2 dargestellte Dicke der Restwand 3 von ungefähr 0,2 Millimetern. Die Restwand 3 bildet mit ihrer nach außen gerichteten Unterseite 4 die auf ein zu prüfendes Objekt aufzulegende Fläche.

Die Fig. 2 zeigt eine Schnittansicht durch die Aufnahme nach Fig. 1 entlang der Linie II-II. Die seitlichen Dimensionen der Ausnehmungen 2 sind so bemessen, daß die Wandler jeweils mit einem leichten Spiel in die Ausnehmungen 2 einsetzbar sind. Sie werden dann mit einem aushärtenden Kleber, vorzugsweise mit einem Epoxidharz, vergossen. Dabei sind die Sonden möglichst dicht an der Wand 3 angeordnet um einen möglichst geringen Abstand zu dem Prüfobjekt anzunehmen.

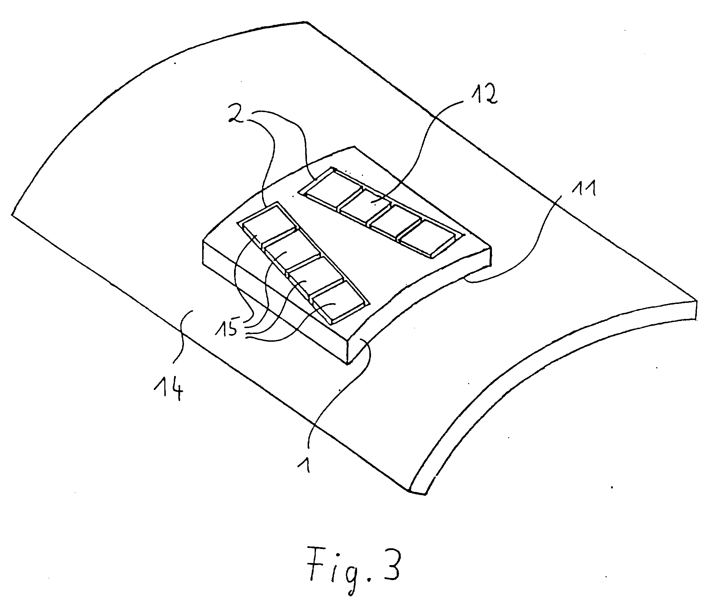

Die Fig. 3 zeigt eine entsprechende Aufnahme 1 gemäß einem zweiten Ausführungsbeispiel zum Meßeinsatz auf zylindrischen Rohren, deren Oberfläche hier mit dem Bezugszeichen 14 versehen ist.

Das spanabhebend bearbeitbare und flexible Kunststoffmaterial aus dem Spezialurethan, welches den Schutzkörper 1 der Aufnahme bildet, ist an seiner Oberseite mit Ausnehmungen 2 versehen, die von oben in den Schutzkörper 1 eingebracht wurden, in welche dann die Wandlerelemente 12 eingelegt worden sind, nachdem die Unterseite 11 des ebenen flexiblen Schutzkörpers 1 an die Rohrkrümmung angepaßt wurde.

Die Fig. 3 zeigt dabei eine Aufnahme für Wandler, bei denen die Schallabstrahlung bei den Prüfeinsätzen in axialer Richtung erfolgt. Gleichzeitig kann mit Hilfe der Fig. 3 das Verfahren zur Herstellung der Aufnahme erläutert werden.

Die Aufnahme 1 wird dabei auf ein ferritisches Rohrsegment 14, welches den gleichen Außendurchmesser wie die in späteren Meßreihen zu untersuchenden Rohre aufweist, derartig aufgesetzt, daß die Unterseite 11 mit dem ferritischen Rohrsegment 14 über ihre ganze Fläche in Kontakt steht. übliche Außendurchmesser von solchen Rohren betragen zwischen 20 und 50 Zentimeter.

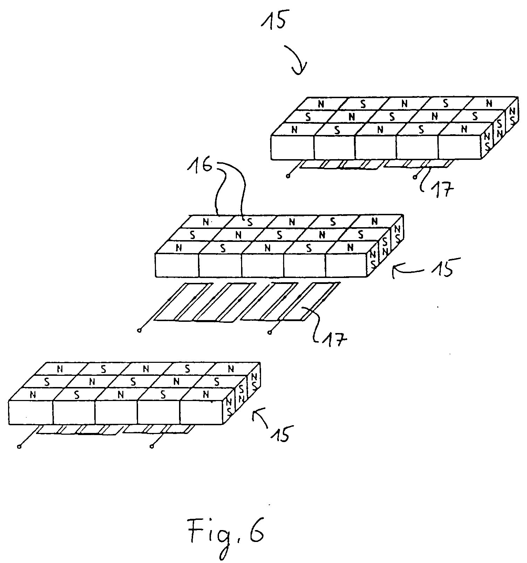

In dem Schutzkörper 1 der Aufnahme sind in der oben genannten Weise die Ausnehmungen 2 eingebracht. Diese weisen eine Tiefe auf, die eine Restwand von z.B. 0,2 Millimeter Stärke belassen. In jeder Ausnehmung 2 werden Permanentmagnete 15 angeordnet, auf deren Unterseite in der Fig. 6 sichtbaren Hochfrequenz-Spulenwicklungen aufgebracht sind. Vorher ist in den Ausnehmungen 2 eine dünne Schicht einer Vergußmasse, zum Beispiel das unter dem Warenzeichen Araldit vertriebene modifizierte Epoxidharz auf der Basis von Bisphenol A, eingebracht worden, so daß die mit den Permanentmagnetsegmenten 15 versehenen Spulen in diese Vergußmasse eintauchen.

Die Permanentmagnetsegmente 15 bestehen aus kleinen Magneten mit in ihrer Anordnung schachbrettmusterartiger alternierender Polbelegung. Die Permanentmagnete 15 können sich nun bei Einsetzen in die Ausnehmungen 2 des Schutzkörpers 1 der Aufnahme an die gekrümmte Oberfläche des ferritischen Rohrsegmentes 14 in die Vergußmasse in die unmittelbare Nähe der Wand anziehen. Dabei nehmen die Permanentmagnetsegmente 15 zusammen mit den Spulenwicklungen untereinander und im Bezug auf das ferritische Rohrsegment 14 eine symmetrische und im Abstand zueinander gleichartige Lage ein, die eine optimale Anpassung des entstehenden Ultraschallwandlers für die vorgesehenen Meßeinsätze ermöglicht.

Nach der Ausbildung der Anordnung der Permanentmagnetsegmente 15 werden diese vollständig mit weiterem Klebermaterial in den Ausnehmungen 2 vergossen. Das hierbei verwendete Klebematerial kann insbesondere dem bei der Bildung der Vergußunterschicht verwandten Epoxidharz entsprechen. Anschließend wird der Schutzkörper 1 der Aufnahme zusammen mit den in ihm vergossenen Permanentmagnetsegmenten 15 in die Unterseite eines ebenfalls an die Rohrkrümmung angepaßten Prüfkopfgehäuses eingepaßt und anschließend zusätzlich vergossen.

Mit dem hier beschriebenen Verfahren können elektromagnetische Ultraschallwellenköpfe an unterschiedlichst gekrümmte spätere Prüfoberflächen angepaßt werden, da sich die Permanentmagnetsegmente 15 immer jeweils in normaler Richtung zu 14 und untereinander symmetrisch einstellen.

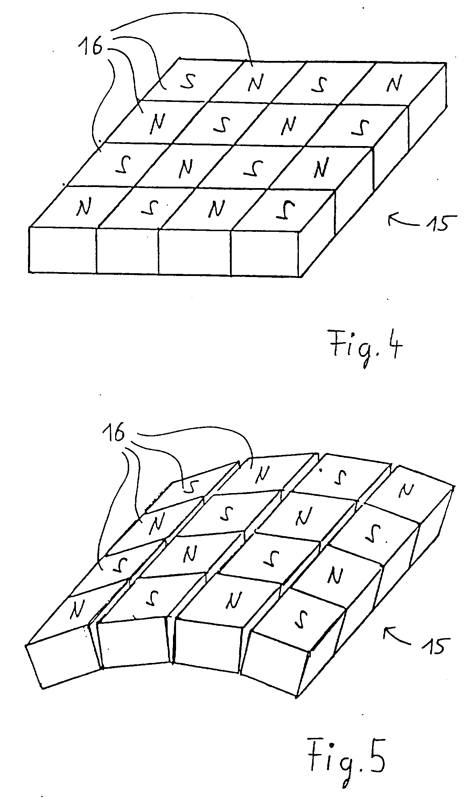

Die Fig. 4 zeigt eine mögliche Anordnung eines Permanentmagneten 15 für eine Aufnahme nach Fig. 3. Ein vollständiges Magnetelement besteht aus zum Beispiel zwei bis vier Reihen von Permanentmagnetsegmenten 15. Jedes Segment 15 besteht jeweils aus mehreren Reihen und von Reihe zu Reihe die Polbelegung wechselnder einzelner Segmente 16, die entsprechend Fig. 4 in einem Schachbrettmuster alternierend angeordnet sind. Um eine gute Anformung der Magneten an die Oberfläche zu erreichen, sollten die Flächen der einzelnen Magneten, die der Werkstoffoberfläche zugewandt sind, möglichst klein sein. Nach dem Einsetzen der Magnetsegmente 16 in die Ausnehmungen 2 der Aufnahme 1 ziehen sich die Magneten an die ferritische Oberfläche 14 derart an, daß sie bei einem Rohr mit einem geringen Krümmungsradius in einer Darstellung ohne die Aufnahme 1 und die Platte 14, die in der Fig. 5 dargestellte Lage annehmen.

Die Fig. 6 schließlich stellt eine perspektivische Explosionsansicht dreier Permanentmagnetanordnungen 15 analog zu Fig. 3 mit ebenfalls dargestellten Hochfrequenzspulen 17. Diese liegen gemäß einer z.B. in Fig. 6 dargestellten vierfachen mäanderförmigen Schleifenbildung unterhalb der hier fünf mal drei Magnetsegmente 16, die eine Permanentmagnetanordnung 15 bilden.

Zwischen den einzelnen Permanentmagnetanordnungen 15 können auch in den Fig. 3-6 nicht dargestellte trennende Stege vorgesehen sein, die die Ausnehmung 2 in kleinere Unterkammern unterteilen. Damit sind die Abstände der einzelnen Magnetsegmente 15 untereinander besser einstellbar und im Fall von Sendewandlern wird eine bessere Isolation zwischen den Wicklungen der Hochfrequenzspulen 17 erreicht.

Neben den beschriebenen mit Hochfrequenzspulen 17 versehenen Permanentmagnetsegmenten 16 können auch mit Hochfrequenzspulen 17 versehene Trägerkörper aus z.B. Kunststoff in die Ausnehmungen des aus Rhino-Hyde bestehenden Teiles eingesetzt und vergossen werden.

Durch die Anordnung und Vorfixierung der Wandlerelemente 16 in der Vergußunterschicht ergibt sich eine optimale Ausrichtung und Anpassung von diesen an die Bezugsfläche, so daß ein hohes Signal/Rausch-Verhältnis erreichbar ist, das aufgrund des abriebfesten Schutzkörpers 1 lange aufrechterhalten werden kann. Es ist kein meßbarer Abrieb bei einer Anpresskraft an die Werkstoffoberfläche 14 von ungefähr 50 Newton festgestellt worden. Für Meßanwendungen im Stutzenbereich von Werkstücken kann die Aufnahme 1 auch an eine zweifach gekrümmte Fläche angepaßt werden, so daß auch solche Problembereiche sicher ausgemessen werden können.

## Patentansprüche

1. Verfahren zur Herstellung einer Aufnahme zum Verschleißschutz von Ultraschallwandlern mit einem mit Ausnehmungen zur Aufnahme der Ultraschallwandler versehenen flexiblen Schutzkörper, **dadurch gekennzeichnet,** daß eine Vielzahl von magnetischen Sondenelementen in die sich in ihrer Tiefe jeweils bis in unmittelbare Nähe zu der Unterseite des flexiblen Schutzkörpers erstreckenden Ausnehmungen auf eine zuvor aufgebrachte Vergußunterschicht eingesetzt werden, daß der flexible Schutzkörper mit seiner Unterseite auf einen ferritischen Körper mit einer der Oberfläche des späteren Meßobjektes entsprechenden Oberfläche aufgesetzt wird, so daß die Unterseite des flexiblen Schutzkörpers an die Oberfläche des späteren Meßobjektes angepaßt wird, und daß nach einer Anordnungszeit die magnetischen Sondenelemente in den Ausnehmungen mit einem Kleber vergossen werden.

2. Verfahren nach Anspruch 1, dadurch gekennzeichnet, daß in die Ausnehmungen magnetische Sondenelemente eingesetzt werden, die jeweils aus einem Satz in ihrer Ausrichtung schachbrettmusterartig verteilter Permanentmagnete und aus unterhalb von diesen angeordneter Hochfrequenzspulenelemente bestehen.

3. Verfahren nach Anspruch 3, dadurch gekennzeichnet, daß die magnetischen Sondenelemente in zwei länglichen, mehrere Sätze Magnetsegmente aufnehmenden Reihen in alternierender Reihenfolge verteilt sind

4. Verfahren nach einem der vorstehenden Ansprüche, dadurch gekennzeichnet, daß als der die Vergußunterschicht bildende Kleber ein zu dem die magnetischen Sondenelemente in den Ausnehmungen vergiessenden Kleber identischer verwendet wird.

## Claims

1. Method for the manufacture of a holder for protection of ultrasound transducers against wear, with a flexible protective body provided with recesses for holding the ultrasound transducers, characterised in that a plurality of magnetic probe elements are inserted in the recesses which in their depth extend in each case into the immediate vicinity of the lower side of the flexible protective body, onto a previously applied lower sealing layer, in that the flexible protective body is placed with its lower side on a ferritic body with a surface corresponding to the surface of the subsequent test object, so that the lower side of the flexible protective body is adapted to the surface of the subsequent test object, and in that after a positioning period the magnetic probe elements are sealed in the recesses with an adhesive.

2. Method according to claim 1, characterised in that in the recesses are inserted magnetic probe elements which in each case consist of a set of permanent magnets distributed in a chessboard pattern in their orientation, and highfrequency coil elements arranged beneath the latter.

3. Method according to claim 3, characterised in that the magnetic probe elements are divided into two elongate rows containing several sets of magnetic segments, in alternating sequence.

4. Method according to any of the preceding claims, characterised in that as the adhesive forming the lower sealing layer there is used one identical with the adhesive which seals the magnetic probe elements in the recesses.

## Revendications

1. Procédé de fabrication d'un logement, destiné à protéger, contre l'usure, des transducteurs à ultrasons, et comportant un corps souple de protection muni d'évidements pour loger les transducteurs à ultrasons, caractérisé en ce qu'une pluralité d'éléments de sonde magnétiques sont placés sur une couche de base préalablement coulée dans des évidements, qui s'étendent en profondeur chaque fois jusqu'à proximité immédiate de la face inférieure du corps souple de protection, en ce que le corps souple de protection est placé, par sa face inférieure, sur un corps ferritique ayant une surface correspondant à la surface de l'objet à mesurer ultérieurement, de telle manière que la face inférieure du corps souple de protection soit adaptée à la surface de l'objet à mesurer ultérieurement, et en ce que, après un temps de disposition, les éléments de sonde magnétiques sont scellés dans les évidements à l'aide d'un adhésif.

2. Procédé selon la revendication 1, caractérisé en ce que les éléments de sonde magnétiques, placés dans les évidements, consistent chaque fois en un groupe d'aimants permanents, répartis selon un alignement en échiquier, et en des éléments formant bobines haute fréquence, disposés au-dessous de ceux-ci.

3. Procédé selon la revendication 1, caractérisé en ce que les éléments de sonde magnétiques sont répartis en deux rangs oblongs comprenant plusieurs groupes de segments magnétiques, selon un ordre alternant.

4. Procédé selon l'une des revendications précédentes, caractérisé en ce que, pour l'adhésif constituant la couche de base coulée, on utilise un adhésif identique à celui qui scelle les éléments de sonde magnétiques dans les évidements.
